# FASCICULE DE BREVET EUROPEEN

(11) **EP 1 021 659 B1**
(45) Date de publication et mention de la délivrance du brevet: **16.03.2005**
(21) Numéro de dépôt: 99934795.8
(22) Date de dépôt: 28.07.1999
(51) Int. Cl.: F16C 1/14, F16C 1/26

(54) **DISPOSITIF DE COMMANDE A DISTANCE PAR CABLE POUR EQUIPEMENT DE VEHICULE AUTOMOBILE**
BOWDENZUG FÜR KRAFTFAHRZEUGSAUSRÜSTUNG
REMOTE CONTROL DEVICE BY CABLE FOR MOTOR VEHICLE EQUIPMENT

(30) Priorité: 10.08.1998 FR 9810252
(43) Date de publication de la demande: 26.07.2000
(73) Titulaire: VALEO CLIMATISATION, 78321 La Verrière (FR)
(72) Inventeur: FEUILLARD, Vincent, F-78320 Le Mesnil Saint Denis (FR); PAUMIER, Carine, F-78000 Versailles (FR); SEUGE, Olivier, Swansea SA2 7DJ (GB)
(86) Numéro de dépôt international: PCT/FR1999/001860
(87) Numéro de publication internationale: WO 2000/009897

(56) Documents cités:
- CH-A- 682 837
- DE-A- 2 418 110
- FR-A- 1 522 596
- GB-A- 1 458 523
- US-A- 4 185 515
- US-A- 5 682 798
- PATENT ABSTRACTS OF JAPAN vol. 11, no. 235 (M-612), 31 juillet 1987 (1987-07-31) & JP 62 048530 A (ASAHI), 3 mars 1987 (1987-03-03)

## Description

L'invention concerne un dispositif de commande à distance par câble pour un équipement de véhicule automobile tel que, par exemple, un appareil de chauffage et/ou climatisation de l'habitacle d'un tel véhicule.

Le dispositif de l'invention est du type comprenant un câble dont les extrémités sont munies chacune d'un embout, une gaine dans laquelle peut coulisser le câble de sorte que les extrémités du câble dépassent des extrémités de la gaine, ainsi que des attaches propres à solidariser les extrémités de la gaine sur des parties du véhicule.

Dans les dispositifs connus de ce type, l'une des attaches est solidarisée généralement à un tableau de commande prévu sur la planche de bord du véhicule, tandis que l'autre attache est solidarisée à l'équipement proprement dit.

Habituellement, l'une des extrémités du câble est prévue pour être reliée à l'extrémité d'un levier pivotant actionné par un bouton de commande, tandis que l'autre extrémité du câble est prévue pour être reliée à l'extrémité d'un autre levier qui actionne un organe mobile de l'équipement. Un tel dispositif comportant les caractéristiques du préambule de la revendication 1 est décrit dans US-A-4 185 515.

Dans le cas d'un appareil de chauffage et/ou climatisation de véhicule automobile, ce dernier levier sert le plus souvent à actionner le déplacement en rotation d'un volet pivotant qui contrôle un flux d'air.

De tels dispositifs de commande par câble posent notamment des problèmes de réglage, étant donné qu'il faut pouvoir faire correspondre deux positions de fin de course de l'organe de commande (généralement un bouton rotatif) à deux positions respectives de fin de course d'un organe mobile de l'équipement du véhicule.

Autrement dit, il faut ajuster de façon précise la différence entre la longueur du câble (définie entre ses deux extrémités), et la longueur de la gaine (définie entre ses deux extrémités ou entre ses deux attaches). Cette différence de longueur est encore appelée "dépassant fonctionnel".

Or, le réglage de cette différence de longueur est délicat à maîtriser étant donné que la gaine et le câble possèdent tous deux une tolérance dimensionnelle. En effet, la tolérance de la gaine peut atteindre des valeurs de plus ou moins 1mm, voire plus ou moins 2mm, tandis que le câble a lui-même une tolérance dimensionnelle de plus ou moins 1mm. Il en résulte que la différence précitée, correspondant à la valeur du dépassant fonctionnel, peut avoir une tolérance de plus ou moins 3mm par rapport à sa valeur nominale.

Différentes solutions ont déjà été proposées pour tenter de résoudre ce problème.

Une solution consiste à régler le "dépassant fonctionnel" directement sur la ligne d'assemblage du véhicule en plaçant une agrafe de fixation de la gaine, à l'une des extrémités de cette dernière, généralement du côté du boîtier de l'équipement. Cette solution nécessite le recours à un opérateur expérimenté, ce qui complique les opérations de montage et augmente également leur coût.

Il est connu aussi de régler la côte du "dépassant fonctionnel" avant montage sur la ligne d'assemblage. Ce réglage peut être obtenu par exemple par un dispositif de réglage à vis situé au milieu de la commande à distance, ou encore par un dispositif avec un collier de serrage, comme enseigné par le document EP 0 492 289. Là encore, ces solutions sont longues et coûteuses à réaliser.

D'autres solutions consistent à utiliser des dispositifs d'auto-réglage à ressort entre les câbles et la gaine. Ces dispositifs sont coûteux et n'assurent pas une grande fiabilité.

L'invention a notamment pour but de surmonter les inconvénients précités.

Elle vise notamment à procurer un dispositif de commande à distance du type défini précédemment, qui permet d'assurer un réglage précis du dépassant fonctionnel avant montage sur le véhicule.

L'invention selon la revendication 1 propose à cet effet un dispositif de commande à distance du type défini en introduction, dans lequel les embouts et les attaches sont surmoulés respectivement sur le câble et la gaine à partir d'une même matière plastique.

Ainsi, les deux embouts et les attaches peuvent être surmoulés dans des positions respectives bien définies, ce qui permet d'ajuster à chaque fois le "dépassant fonctionnel" avec une faible tolérance.

De façon avantageuse, l'invention prévoit qu'un embout et une attache associée sont surmoulés simultanément avec un contrôle précis de la distance entre l'embout et l'attache.

Dans une forme de réalisation préférée de l'invention, les deux embouts sont identiques. De préférence, ces derniers ont chacun une forme de révolution, en particulier une forme sensiblement sphérique, de préférence par rapport à l'axe du câble.

Dans cette forme préférée de réalisation de l'invention, les deux attaches sont identiques.

Ainsi, lorsque les deux embouts sont identiques et que les deux attaches sont également identiques, la commande à distance offre une symétrie et elle peut donc être installée de manière indifférente, sans qu'il y ait lieu de choisir un sens de montage particulier.

Dans le cas où les deux attaches sont identiques, elles peuvent avoir une forme de révolution, en particulier une forme sensiblement cylindrique, de préférence par rapport à l'axe de la gaine. Une telle forme convient essentiellement à une connexion radiale de l'attache sur un support faisant partie du véhicule.

Dans une autre variante, chaque attache comprend des moyens d'encliquetage axial et des moyens d'encliquetage radial pour la connexion de l'attache au choix, soit sur un support à fixation axiale, soit sur un support à fixation radiale.

Dans ce cas particulier, on prévoit avantageusement que chaque attache comprend un manchon fendu pour l'encliquetage axial, qui dépend d'une bague pour l'encliquetage radial, le manchon étant situé du côté de l'extrémité de la gaine.

Avantageusement, ce manchon fendu comporte des fentes axiales qui délimitent entre elles des pattes axiales munies de crochets respectifs susceptibles de fléchir radialement.

Dans une autre forme de réalisation de l'invention, les deux attaches sont différentes.

Ainsi, l'une des attaches peut comprendre une bague propre à être encliquetée radialement dans un bloc récepteur du véhicule, tandis que l'autre attache peut comprendre une bague munie d'un organe d'encliquetage propre à être reçu dans un autre bloc récepteur du véhicule.

Dans les différentes formes de réalisation de l'invention, les embouts et les attaches sont de préférence réalisés en une matière thermoplastique, qui est avantageusement chargée.

Il peut s'agir par exemple d'une matière du type polyoxyméthylène (POM), ou du type polypropylène, chargée par du talc.

Sous un autre aspect, l'invention concerne un procédé de fabrication d'un dispositif de commande à distance tel que défini précédemment, lequel comprend les opérations suivantes :
a) prévoir une gaine dans laquelle est enfilée un câble en sorte que les extrémités du câble dépassent les extrémités de la gaine ; et
b) surmouler, à partir de la même matière plastique, deux embouts respectivement sur les deux extrémités du câble et deux attaches respectivement sur les deux extrémités de la gaine.

Dans l'opération b), on prévoit avantageusement qu'un embout et une attache associée sont surmoulés simultanément avec un contrôle précis de la distance entre l'embout et l'attache.

Ainsi, on peut prévoir que l'opération b) comprend d'abord le surmoulage simultané d'un embout et d'une attache associée, puis le surmoulage simultané d'un autre embout et d'une attache associée.

Dans la description qui suit, faite seulement à titre d'exemple, on se réfère aux dessins annexés, sur lesquels :
- la figure 1 est une représentation schématique d'un dispositif selon l'invention appliqué à la commande d'un volet rotatif faisant partie d'un appareil de chauffage et/ou de climatisation de véhicule automobile, à partir d'un bouton rotatif ;
- la figure 2 représente schématiquement le dispositif de commande lui-même (câble et gaine) avant surmoulage des embouts et des attaches ;
- les figures 3 à 5 illustrent schématiquement le dispositif de la figure 2 au cours de différentes opérations de surmoulage ;
- la figure 6 est une vue en coupe longitudinale de l'extrémité d'un dispositif de commande selon l'invention, dans une première forme de réalisation de l'invention ;
- la figure 7 est une vue analogue à la figure 6, dans une deuxième forme de réalisation de l'invention ;
- la figure 8 montre schématiquement la connexion axiale du dispositif de la figure 7 avec un support faisant partie d'un véhicule automobile ;
- la figure 9 est une vue en coupe longitudinale d'un support pour le montage radial du dispositif de la figure 7 ;
- la figure 10 est une vue en coupe selon la ligne X-X de la figure 9 ;
- la figure 11 est une vue en perspective de l'extrémité d'un dispositif de commande à distance selon l'invention ;
- la figure 12 est une vue en perspective d'un bloc récepteur propre à permettre la connexion radiale de l'attache de la figure 11 ;
- la figure 13 est une vue en perspective d'un autre bloc récepteur dans une variante de réalisation ;
- la figure 14 montre une vue en perspective de l'autre extrémité du dispositif de commande à distance de la figure 11 ; et
- la figure 15 est une vue en perspective d'un bloc récepteur propre à permettre la connexion radiale de l'attache de la figure 14.

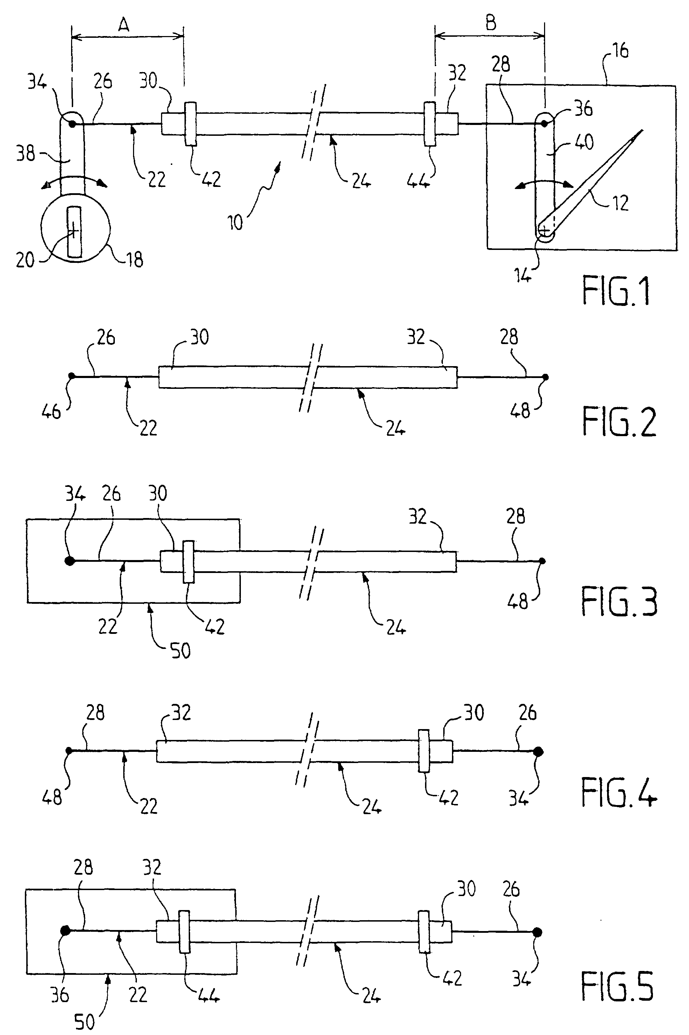

On se réfère tout d'abord à la figure 1 qui représente un dispositif 10 prévu pour la commande à distance d'un volet 12 monté pivotant autour d'un axe 14 et faisant partie d'un appareil de chauffage et/ou climatisation 16 de l'habitacle d'un véhicule automobile. La commande du volet s'effectue à partir d'un bouton 18 monté rotatif autour d'un axe 20.

Le dispositif 10 comprend un câble déformable 22, réalisé avantageusement en acier, qui coulisse à l'intérieur d'une gaine souple 24. Le câble 22 comprend deux extrémités 26 et 28 qui dépassent des extrémités respectives 30 et 32 de la gaine 24. Les extrémités 26 et 28 sont munies d'embouts respectifs 34 et 36.

L'embout 34 est prévu pour être relié à l'extrémité d'un levier 38 qui est solidaire en rotation du bouton 20, tandis que l'embout 36 est prévu pour être relié à l'extrémité d'un levier 40 pivotant autour de l'axe 14 et solidaire en rotation du volet 12.

Ainsi, l'actionnement du bouton rotatif 18 dans un sens ou dans l'autre provoque le déplacement en rotation du volet 12. Ce dernier sert à contrôler le passage d'un flux d'air dans le boîtier de l'appareil 16.

Les embouts 34 et 36 sont surmoulés sur les extrémités respectives 26 et 28 du câble à partir d'une matière plastique appropriée. En outre, deux attaches 42 et 44 sont surmoulées, à partir de la même matière plastique, autour de la gaine 24, au niveau ou à proximité de ses extrémités respectives 30 et 32.

Le surmoulage des embouts 34 et 36 et des attaches 42 et 44 s'effectue dans des conditions précises, de manière que la distance A qui sépare l'embout 34 de l'extrémité 30 de la gaine (ici définie par la position de l'attache 42) et que la distance B qui sépare l'embout 36 de l'extrémité 32 de la gaine 24 (ici définie par la position de l'attache 44) soient réalisées avec une tolérance minimale.

La somme A + B correspond à la valeur D du "dépassant fonctionnel" du dispositif de commande 10.

On se réfère maintenant aux figures 2 à 5 pour décrire la mise en place des embouts 34 et 36 et des attaches 42 et 44 par surmoulage.

On prévoit au départ (figure 2) une commande à distance comprenant la gaine 24 dans laquelle est enfilée le câble 22 de sorte que les extrémités 26 et 28 du câble dépassent respectivement des extrémités 30 et 32 de la gaine. Les extrémités 26 et 28 du câble sont terminées respectivement par deux protubérances 46 et 48 destinées à faciliter le surmoulage ultérieur des embouts 34 et 36.

Dans une opération ultérieure (figure 3) on procède au surmoulage simultané de l'embout 34 autour de la protubérance 46 et de l'attache 42 autour de l'extrémité 30 de la gaine. Ce surmoulage s'effectue de manière simultané au cours d'une même opération à l'aide d'un moule 50 représenté de façon schématique. Ce moule permet le surmoulage de l'embout 34 et de l'attache 42 avec un positionnement précis relatif de ces derniers. Cela permet de définir une distance A avec une tolérance minimale. Après démoulage, on retourne le dispositif pour le placer dans la position de la figure 4.

On place ensuite l'extrémité 28 du câble et l'extrémité 32 de la gaine dans le même moule 50 ce qui permet de réaliser le surmoulage de l'embout 36 et de l'attache 44 au cours d'une même opération. Il en résulte là aussi un positionnement mutuel précis de l'embout et de l'attache, permettant d'obtenir une distance B entre eux, avec une tolérance minimale.

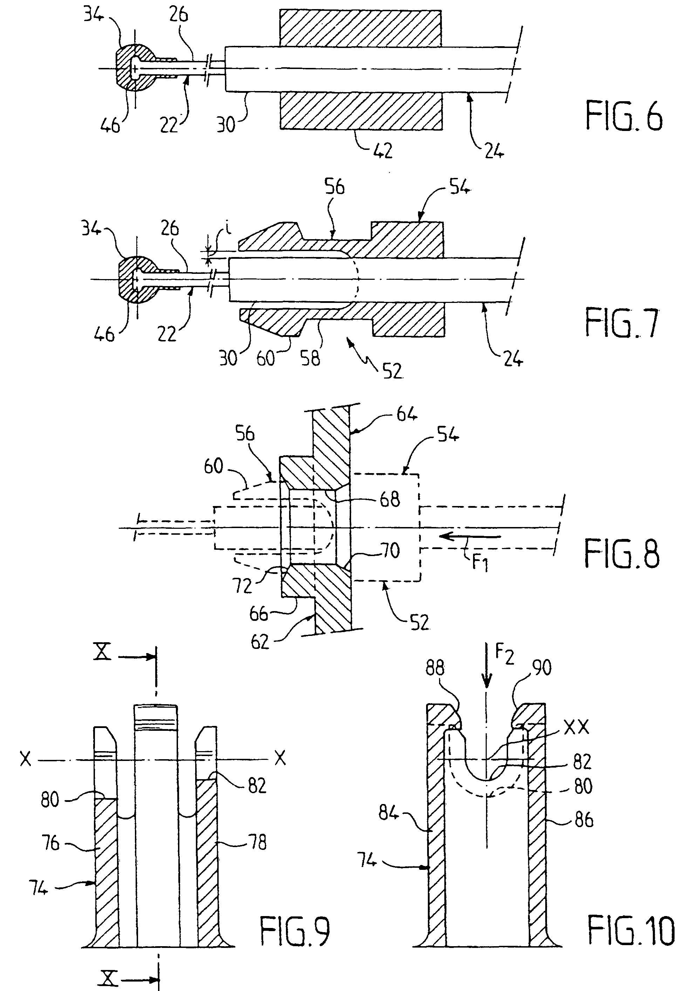

Ainsi, à l'issue de l'opération représentée sur la figure 5, on obtient une commande à distance 10 analogue à celle représentée sur la figure 1, dans laquelle le dépassant fonctionnel D (soit A + B) présente une tolérance minimale.

Dans le procédé ci-dessus, on utilise avantageusement la même matière thermoplastique pour le surmoulage des deux embouts et des deux attaches. De préférence, on utilise une matière thermoplastique du type chargé. A titre d'exemple, on peut utiliser une matière du type polyoxyméthylène ou du type polypropylène, chargée par du talc, par exemple contenant 20% en poids de talc.

Dans une forme de réalisation préférée de l'invention, les embouts 34 et 36 sont identiques et ont une forme de révolution, avantageusement une forme sensiblement sphérique, par rapport à l'axe du câble.

La figure 6 montre l'embout 34 surmoulé autour de la protubérance 46 du câble 12.

Egalement, de façon avantageuse, les attaches 42 et 44 sont identiques. De préférence, ces deux attaches ont une forme de révolution, en particulier une forme sensiblement cylindrique, par rapport à l'axe de la gaine.

Ainsi, lorsque les embouts sont identiques et les attaches 42 et 44 sont identiques, le dispositif est symétrique.

La figure 6 montre la structure cylindrique de l'attache 42 qui est associée à l'embout 34. Une attache 42 ainsi réalisée convient tout particulièrement à un montage radial sur un support approprié du véhicule, comme on le verra plus loin.

On se réfère maintenant à la forme de réalisation de la figure 7, dans laquelle les embouts 34 et 36 sont identiques entre eux et identiques à la forme de réalisation de la figure 6, et dans laquelle le dispositif comprend deux attaches identiques 52 dont une seule est représentée, à savoir celle prévue à l'extrémité 30 de la gaine. Cette attache 52 comprend une bague 54 de forme générale cylindrique surmoulée étroitement autour de la gaine, et un manchon fendu 56 qui est formé d'une seule pièce avec la bague 54 et qui est situé du côté de l'extrémité de la gaine.

Le manchon 56 comprend une pluralité de fentes axiales qui délimitent entre elles des pattes axiales 58 terminées par des crochets respectifs 60 et susceptibles de fléchir radialement. Les crochets 60 sont tournés vers l'extérieur et sont prévus pour permettre un encliquetage axial de l'attache 52, alors que la bague 54 est prévue pour permettre un encliquetage radial. Ainsi une même attache 52 peut être utilisée au choix dans un montage de type axial ou dans un montage de type radial, comme on le verra plus loin.

Comme on peut le voir sur la figure 7, les pattes 58 ménagent, dans leur position de repos, un intervalle i entre elles et la gaine pour permettre le fléchissement radial des crochets.

On se réfère maintenant à la figure 8 qui montre l'encliquetage axial de l'attache 52 sur un support 62 à fixation axiale. Le support 12 fait partie d'un tableau de commande 64 comportant, par exemple, un bouton rotatif 18 analogue à celui de la figure 1. Le support 62 comprend une bague annulaire 66 destinée à être traversée par l'attache 62, laquelle est elle-même traversée par la gaine et par le câble. La bague 66 délimite un passage axial 68 de forme cylindrique circulaire débouchant respectivement sur un cône d'entrée 70 et un cône de sortie 72. Le cône d'entrée 70 facilite l'introduction de l'attache 52 dans la direction axiale de la flèche F1, ce qui permet une déformation radiale vers l'intérieur des pattes 58 en forme de crochets. Après introduction complète, l'attache 52 occupe la position représentée en trait interrompu sur la figure 8, dans laquelle les crochets 60 se sont écartés radialement vers l'extérieur et prennent appui contre le cône de sortie 72, tandis que la bague 54 prend appui de l'autre côté près du cône d'entrée 70.

L'attache 52 et le support 64 ont des formes conjuguées qui autorisent un maintien axial précis de l'attache dans le support.

On se réfère maintenant aux figures 9 et 10 qui représentent un autre support 74 destiné à la fixation de l'autre attache, qui est identique à l'attache 52 de la figure 7. Le support 74 est prévu, dans l'exemple, pour faire partie de l'appareil 16 de chauffage et/ou climatisation. Le support 74 comprend essentiellement un plot de forme parallélépipédique présentant deux parois opposées 76 et 78 délimitant respectivement deux logements 80 et 82 en forme de U, ces deux logements étant alignés suivant un axe XX, le logement 80 étant de dimensions plus importantes que le logement 82.

Entre les parois 76 et 78 sont prévues deux pattes déformables en vis à vis 84 et 86 terminées respectivement par deux crochets 88 et 90 tournés l'un vers l'autre. Le support 74 autorise une fixation radiale de l'attache 52 dans la direction de la flèche F2. Au cours de l'introduction, les crochets 88 et 90 s'écartent l'un de l'autre puis se rapprochent ensuite une fois que l'attache 52 est immobilisée dans le support 74.

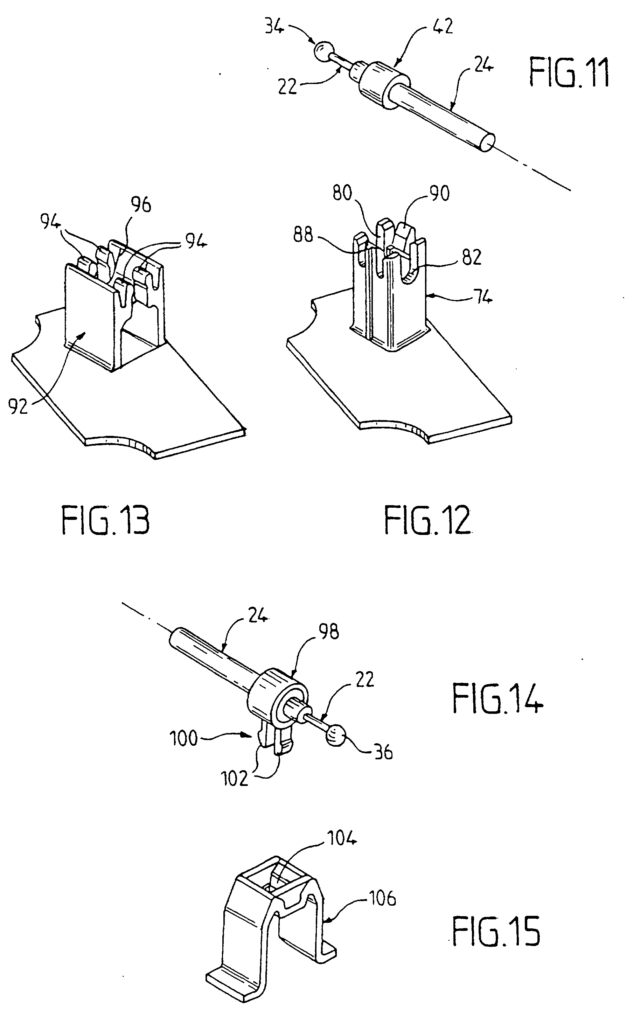

On se réfère maintenant à la figure 11 qui est une vue en perspective correspondant à la figure 6. L'attache 42, de forme cylindrique circulaire, est propre à être reçue dans le support 74 des figures 9 et 10, lequel est également représenté en perspective sur la figure 12.

L'attache 42 peut aussi être reçue dans un support 92 tel que représenté à la figure 13, qui comprend deux paires de pattes élastiques 94 espacées axialement l'une de l'autre et susceptibles de maintenir la gaine de part et d'autre de l'attache 42, celle-ci étant reçue dans un évidement 96, de forme conjuguée, délimité entre les paires de pattes 94.

On se réfère maintenant à la figure 14 qui montre une autre attache 98, de forme générale cylindrique. Celle-ci est réalisée d'une seule pièce avec un organe d'encliquetage 100 s'étendant en direction radiale. Ce dernier est formé de deux crochets 102 espacés l'un de l'autre et tournés dans des directions opposées.

Cet organe 100 est propre à être reçu dans un évidement 104 de forme conjuguée que comporte un support 106 (figure 15) propre à être solidarisé au boîtier de l'appareil 16. Ainsi, les attaches 42 (figure 11) et 98 (figure 14) sont différentes et sont susceptibles de s'encliqueter radialement dans des supports respectifs par des moyens différents.

## Revendications

1. Dispositif de commande à distance pour un équipement de véhicule automobile, du type comprenant un câble (22) comportant des première et deuxième extrémités (26, 28) munies d'un premier et deuxième embout (34, 36), une gaine (24) dans laquelle peut coulisser le câble de sorte que les première et deuxième extrémités (26, 28) du câble dépassent des première et deuxième extrémités (30, 32) de la gaine, ainsi que des attaches (42, 44 ; 52 ; 98),
**caractérisé en ce que** le premier embout (34) et la première attache (42; 52; 98) sont surmoulés respectivement sur la première extrémité (26) du câble (22) et sur la première extrémité (30) de la gaine (24) respectivement à une distance (A) à partir d'une même matière plastique et **en ce que** le deuxième embout (36) et la deuxième attache (44; 52; 98) sont surmoulés respectivement sur la deuxième extrémité (28) du câble (22) et sur la deuxième extrémité (32) de la gaine (24) respectivement à une distance (B) à partir d'une même matière plastique.

2. Dispositif selon la revendication 1, **caractérisé en ce qu'**un embout (34, 36) et une attache associée (42, 44) sont surmoulés simultanément avec un contrôle précis de la distance (A; B) entre l'embout et l'attache.

3. Dispositif selon l'une des revendications précédentes, **caractérisé en ce que** les deux embouts (34, 36) sont identiques.

4. Dispositif selon l'une des revendications 1 à 3, **caractérisé en ce que** les deux embouts (34, 36) ont Chacun une forme de révolution, en particulier une forme sensiblement sphérique.

5. Dispositif selon l'une des revendications 1 à 4, **caractérisé en ce que** les deux attaches (42, 44 ; 52, 52) sont identiques.

6. Dispositif selon l'une des revendications 1 à 5, **caractérisé en ce que** les deux attaches ont une forme de révolution, en particulier une forme sensiblement cylindrique.

7. Dispositif selon la revendication 5, **caractérisé en ce que** chaque attache (52) comprend des moyens (56) d'encliquetage axial et des moyens (54) d'encliquetage radial pour la connexion de l'attache au choix, soit sur un support (64) à fixation axiale, soit sur un support (74) à fixation radiale.

8. Dispositif selon la revendication 7, **caractérisé en ce que** chaque attache comprend un manchon fendu (56) pour l'encliquetage axial, dépendant d'une bague (54) pour l'encliquetage radial, le manchon (56) étant situé du côté de l'extrémité de la gaine.

9. Dispositif selon la revendication 8, **caractérisé en ce que** le manchon fendu (56) comporte des fentes axiales délimitant entre elles des pattes axiales (58) munies de crochets respectifs (60) susceptibles de fléchir radialement.

10. Dispositif selon l'une des revendications 1 à 4, **caractérisé en ce que** les deux attaches (42, 98) sont différentes.

11. Dispositif selon la revendication 10, **caractérisé en ce que** l'une (42) des attaches comprend une bague propre à être encliquetée radialement dans un bloc récepteur (74 ; 92), tandis que l'autre attache (98) comprend une bague munie d'un organe d'encliquetage (100) propre à être reçu dans un autre bloc récepteur (106).

12. Dispositif selon l'une des revendications 1 à 11, **caractérisé en ce que** les embouts et les attaches sont réalisés en une matière thermoplastique, avantageusement chargée.

13. Dispositif selon la revendication 12, **caractérisé en ce que** les embouts et les attaches sont réalisés en une matière du type polyoxyméthylène ou du type polypropylène, chargée par du talc.

14. Procédé de fabrication d'un dispositif de commande à distance selon l'une des revendications 1 à 13, **caractérisé en ce qu'**il comprend les opérations suivantes :
a) prévoir une gaine (24) dans laquelle est enfilé un câble (22) en sorte que des première et deuxième extrémités (26, 28) du câble dépassent des première et deuxième extrémités (30, 32) de la gaine ; et
b) surmouler simultanément un premier embout (34) respectivement sur la première extrémité (26) du câble (22) et une première attache (42; 52; 98) respectivement sur la première extrémité de la gaine avec un contrôle précis de la distance (A) entre le premier embout et la première attache à partir d'une même matière plastique.
c) surmouler simultanément un deuxième embout (36) respectivement sur la deuxième extrémité (28) du câble (22) et une deuxième attache (44; 52; 98) respectivement sur la deuxième extrémité de la gaine avec un contrôle précis de la distance (B) entre le deuxième embout et la deuxième attache à partir d'une même matière plastique.

15. Procédé selon la revendication 14, **caractérisé en ce que** les opérations b) et c) sont réalisées simultanément avec un contrôle précis de la distance (A; B) entre les embouts et les attaches respectives.

## Patentansprüche

1. Vorrichtung zur Fernbedienung einer Kraftfahrzeugeinrichtung bestehend aus einem Kabel (22), Innenzug, Stahldraht Seil, mit einem ersten und einem zweiten, jeweils eine erste und eine zweite Endkappe (34, 36) aufweisenden Ende (26, 28), einer Hülle (24), in der das Kabel verschiebbar angeordnet ist, sodass das erste und das zweite Ende (26, 28) des Kabels aus dem ersten und dem zweiten Ende (30, 32) der Hülle sowie dem Verbinder (42, 44; 52; 98) herausragen, **dadurch gekennzeichnet, dass** die erste Endkappe (34) und der erste Verbinder (42; 52; 98) jeweils aus demselben Kunststoff an dem ersten Ende (26) des Kabels (22) und an dem ersten Ende (30) der Hülle (24) jeweils in einem Abstand (A) angeformt sind, und dass die zweite Endkappe (36) und der zweite Verbinder (44; 52; 98) jeweils aus demselben Kunststoff an dem zweiten Ende (28) des Kabels (22) und an dem zweiten Ende (32) der Hülle (24) jeweils in einem Abstand (B) angeformt sind.

2. Vorrichtung nach Anspruch 1, **dadurch gekennzeichnet, dass** eine Endkappe (34, 36) und ein zugehöriger Verbinder (42, 44) gleichzeitig mit einer präzisen Kontrolle des Abstandes (A; B) zwischen der Endkappe und dem Verbinder angeformt werden.

3. Vorrichtung nach einem der vorhergehenden Ansprüche, **dadurch gekennzeichnet, dass** die beiden Endkappen (34, 36) identisch sind.

4. Vorrichtung nach einem der Ansprüche 1 bis 3, **dadurch gekennzeichnet, dass** die beiden Endkappen (34, 36) jeweils rund, im wesentlichen kugelförmig ausgebildet sind.

5. Vorrichtung nach einem der Ansprüche 1 bis 4, **dadurch gekennzeichnet, dass** die beiden Verbinder (42, 44; 52, 52) identisch sind.

6. Vorrichtung nach einem der Ansprüche 1 bis 5, **dadurch gekennzeichnet, dass** die beiden Verbinder rund, im wesentlichen zylindrisch ausgebildet sind.

7. Vorrichtung nach Anspruch 5, **dadurch gekennzeichnet, dass** jeder Verbinder (52) axiale Rastmittel (56) und radiale Rastmittel (54) zum Anschluss des Verbinders wahlweise entweder an einen axial befestigten Halter (64) oder an einen radial befestigten Halter (74) umfaßt.

8. Vorrichtung nach Anspruch 7, **dadurch gekennzeichnet, dass** jeder Verbinder zum axialen Einrasten eine geschlitzte Hülse (56) umfaßt, die zum radialen Einrasten von einem Ring (54) abhängig ist, wobei die Hülse (56) in der Nähe des Hüllenendes angeordnet ist.

9. Vorrichtung nach Anspruch 8, **dadurch gekennzeichnet, dass** die geschlitzte Hülse (56) Schlitze aufweist, die axiale, jeweils mit radial biegbaren Haken (58) ausgerüstete Laschen (58) voneinander trennen.

10. Vorrichtung nach einem der Ansprüche 1 bis 4, **dadurch gekennzeichnet, dass** die beiden Verbinder (42, 98) verschieden sind.

11. Vorrichtung nach Anspruch 10, **dadurch gekennzeichnet, dass** einer der Verbinder (42) einen radial in einen Aufnahmeblock (74; 92) einrastbaren Ring umfaßt, während der andere Verbinder (98) einen Ring umfaßt, der ein in einen weiteren Aufnahmeblock (106) einführbares Rastelement (100) aufweist.

12. Vorrichtung nach einem der Ansprüche 1 bis 11, **dadurch gekennzeichnet, dass** die Endkappen und die Verbinder aus vorteilhafterweise gefülltem thermoplastischem Werkstoff hergestellt ist.

13. Vorrichtung nach Anspruch 12, **dadurch gekennzeichnet, dass** die Endkappen und die Verbinder aus einem mit Talk gefüllten Werkstoff vom Typ Polyoxymethylen oder vom Typ Polypropylen hergestellt sind.

14. Verfahren zur Herstellung einer Fernbedienungsvorrichtung nach einem der Ansprüche 1 bis 13, **dadurch gekennzeichnet, dass** es folgende Arbeitsgänge umfaßt:
a) eine Hülle (24) vorsehen, in die ein Kabel (22) so eingerührt wird, dass das erste und das zweite Ende (26, 28) des Kabels aus dem ersten und dem zweiten Ende (30, 32) der Hülle herausragen; und
b) gleichzeitig eine erste Endkappe (34) jeweils am ersten Ende (26) des Kabels (22) und einen ersten Verbinder (42, 52, 98) jeweils am ersten Ende der Hülle mit präziser Kontrolle des Abstandes (A) zwischen der ersten Endkappe und dem ersten Verbinder aus demselben Kunststoff anformen,
c) gleichzeitig eine zweite Endkappe (36) jeweils am zweiten Ende (28) des Kabels (22) und einen zweiten Verbinder (44, 52, 98) jeweils am zweiten Ende der Hülle mit präziser Kontrolle des Abstandes (B) zwischen der zweiten Endkappe und dem zweiten Verbinder aus demselben Kunststoff anformen,

15. Verfahren nach Anspruch 4, **dadurch gekennzeichnet, dass** die Arbeitsgänge b) und c) gleichzeitig mit präziser Kontrolle des Abstandes (A; B) zwischen den jeweiligen Endkappen und Verbindern durchgeführt werden.

## Claims

1. A remote control device intended for motor vehicle equipment, of the type including a cable (22) with a first and second ends (26, 28) fitted with a first and second end-pieces (34, 36), a sheath (24) inside which the cable can slide so that the first and second ends (26, 28) of the cable protrude from the first and second ends (30, 32) of the sheath, as well as from the fittings (42, 44; 52; 98), **characterised in that** the first end-piece (34) and the first fitting (42; 52; 98) are respectively moulded over the first end (26) of the cable (22) and the first end (30) of the sheath (24) respectively, at a distance (A) from a same plastic material and **in that** the second end (36) and the second fitting (44; 52; 98) are respectively moulded over the second end (28) of the cable (22) and the second end (32) of the sheath (24) respectively, at a distance (B) from a same plastic material.

2. A device as claimed in claim 1, **characterised in that** one end-piece (34, 36) and one related fitting (42, 44) are simultaneously overmoulded with accurate checking of the distance (A; B) between the end-piece and the fitting.

3. A device as claimed in any claim above, **characterised in that** both end-pieces (34, 36) are similar.

4. A device as claimed in one of claims 1 to 3, **characterised in that** both end-pieces (34, 36) are each given a shape of revolution, notably an approximately spherical shape.

5. A device as claimed in one of claims 1 to 4, **characterised in that** both fittings (42, 44; 52, 52) are identical.

6. A device as claimed in one of claims 1 to 5, **characterised in that** both fittings are given a shape of revolution, notably an approximately cylindrical shape.

7. A device as claimed in claim 5, **characterised in that** each fitting (52) includes an axial lock means (56) and radial lock means (54) to link the fitting either to a axial-fitting support (64) or to a radial-fitting support (74), as chosen.

8. A device as claimed in claim 7, **characterised in that** each fitting includes a split sleeve (56) for axial locking, depending on a bushing (54) for radial locking, the sleeve (56) being located on the sheath-end side.

9. A device as claimed in claim 8, **characterised in that** the split sleeve (56) features axial slots delimiting, between them, axial lugs (58) fitted with respective hooks (60) likely to be radially bent.

10. A device as claimed in one of claims 1 to 4, **characterised in that** both fittings (42, 98) are different.

11. A device as claimed in claim 10, **characterised in that** one (42) of the fittings includes a bushing suitable to be radially locked in a receiving block (74; 92), while the other fitting (98) includes a bushing fitted with a locking component (100) suitable to be housed in another receiving block (106).

12. A device as claimed in one of claims 1 to 11, **characterised in that** the end-pieces and the fittings are manufactured in advantageously-filled thermoplastic material.

13. A device as claimed in claim 12, **characterised in that** the end-pieces and fittings are manufactured in a polyoxymethylene- or polypropylene-type material, filled with talc.

14. A manufacturing process for a remote control device as claimed in one of claims 1 to 13, **characterised in that** it includes the following operations:
a) to provide for a sheath (24) inside which a cable is inserted (22) so that the first and second ends (26, 28) of the cable protrude from the first and second ends (30, 32) of the sheath; and
b) to simultaneously mould a first end-piece (34) respectively over the first end (26) of the cable (22) and a first fitting (42; 52; 98) respectively over the first end of the sheath with accurate checking of the distance (A) between the first end-piece and the first fitting from a same plastic material.
c) to simultaneously mould a second end-piece (36) respectively over the second end (28) of the cable (22) and a second fitting (42; 52; 98) respectively over the second end of the sheath with accurate checking of the distance (B) between the second end-piece and the second fitting from a same plastic material.

15. A process as claimed in claim 14, **characterised in that** operations b) and c) are performed simultaneously with accurate checking of the distance (A; B) between the end-pieces and respective fittings.
